(19) Europäisches Patentamt / European Patent Office / Office européen des brevets

(11) **EP 1 805 905 B1**

(12) **FASCICULE DE BREVET EUROPEEN**

(45) Date de publication et mention
de la délivrance du brevet:
**15.02.2017 Bulletin 2017/07**

(21) Numéro de dépôt: **05812266.4**

(22) Date de dépôt: **25.10.2005**

(51) Int Cl.:
*H04B 1/7183* ^(2011.01)     *H04B 14/02* ^(2006.01)
*H04B 1/69* ^(2011.01)     *H04B 1/719* ^(2011.01)

(86) Numéro de dépôt international:
**PCT/FR2005/002650**

(87) Numéro de publication internationale:
**WO 2006/045943 (04.05.2006 Gazette 2006/18)**

(54) **PROCEDE DE SYNCHRONISATION D'UN RECEPTEUR RADIO, ET RECEPTEUR ADAPTE POUR METTRE EN ŒUVRE UN TEL PROCEDE**

VERFAHREN ZUR SYNCHRONISATION EINES FUNKEMPFÄNGERS UND ANGEPASSTER EMPFÄNGER ZUR IMPLEMENTIERUNG DES VERFAHRENS

METHOD FOR THE SYNCHRONIZATION OF A RADIO RECEIVER, AND ADAPTED RECEIVER FOR THE IMPLEMENTATION OF SAID METHOD

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **27.10.2004 FR 0411468**

(43) Date de publication de la demande:
**11.07.2007 Bulletin 2007/28**

(73) Titulaire: **Orange
75015 Paris (FR)**

(72) Inventeurs:
• **SCHWOERER, Jean
F-38000 Grenoble (FR)**
• **DERRIEN, David
F-45380 La Chapelle St Mesmin (FR)**
• **MISCOPEIN, Benoît
F-38000 Grenoble (FR)**
• **BATUT, Eric
F-32200 Gimont (FR)**

(74) Mandataire: **Cabinet Plasseraud
66 rue de la Chaussée d'Antin
75440 Paris Cedex 09 (FR)**

(56) Documents cités:
**US-A- 5 832 035     US-A1- 2004 190 597
US-B1- 6 556 621**

**Description**

La présente invention concerne un procédé de synchronisation d'un récepteur radio, ainsi qu'un récepteur adapté pour mettre en oeuvre un tel procédé. Elle concerne aussi un procédé de transmission comprenant une telle synchronisation du récepteur, et un émetteur radio adapté.

La transmission radio par impulsions est une technique récente de communication à distance, qui est utilisée principalement pour des applications à courte portée. La distance de transmission est inférieure à 100 mètres, typiquement. Il peut s'agir de transmissions à très haut débit, d'au moins 500 Mégabits/seconde par exemple, utilisées dans diverses circonstances telles que, notamment, un port USB2, une transmission de données vidéo entre un lecteur DVD et un projecteur, ou encore une diffusion de données à partir d'une station d'informations mise à disposition du public. Il peut s'agir aussi de transmissions à débit relativement bas, par exemple pour relier des capteurs à un réseau local de surveillance ou d'acquisition de données. Dans ce cas, la transmission par impulsions est particulièrement avantageuse à cause de sa faible consommation énergétique.

Dans une transmission radio par impulsions, une durée de transmission déterminée est affectée à chaque symbole. On entend par symbole un état de modulation utilisé lors du codage de données destinées à être transmises. Pour un mode de transmission 2-PPM (pour «Pulse Position Modulation» en anglais), un symbole correspond à un bit transmis, et pour un mode 4-PPM, un symbole correspond à 2 bits transmis. La durée de transmission du symbole est divisée en un nombre fixé d'intervalles de temps de premier niveau, appelés trames (ou «frames» en anglais). En outre, chaque trame est elle-même divisée en intervalles de temps de second niveau, appelés créneaux (ou «slots» en anglais). A titre d'exemple, la durée de transmission d'un symbole (notée $T_S$) est de 1280 ns (ns pour nanoseconde), la durée d'une trame (notée $T_F$) est de 160 ns et celle d'un créneau (notée $T_C$ pour durée «chip» en anglais) est de 20 ns. Dans ce cas, un symbole correspond à huit trames transmises successivement, et chaque trame correspond elle-même à huit créneaux.

Un symbole est transmis sous forme d'impulsions situées à l'intérieur de certains des créneaux d'une séquence de transmission. Il est codé par l'intermédiaire d'un retard de chaque impulsion par rapport au début du créneau correspondant, appelé retard d'état. En reprenant l'exemple cité plus haut, une durée d'impulsion de l'ordre de 1 ns et un retard d'état aussi de l'ordre de 1 ns sont adaptés pour des créneaux de 20 ns. Du fait de la durée très courte des impulsions, l'énergie radio transmise est répartie sur un intervalle de fréquences très large, de l'ordre de plusieurs GigaHertz. Pour cette raison, le mode de transmission radio par impulsions est désigné par UWB, pour «Ultra Wide Band» en anglais.

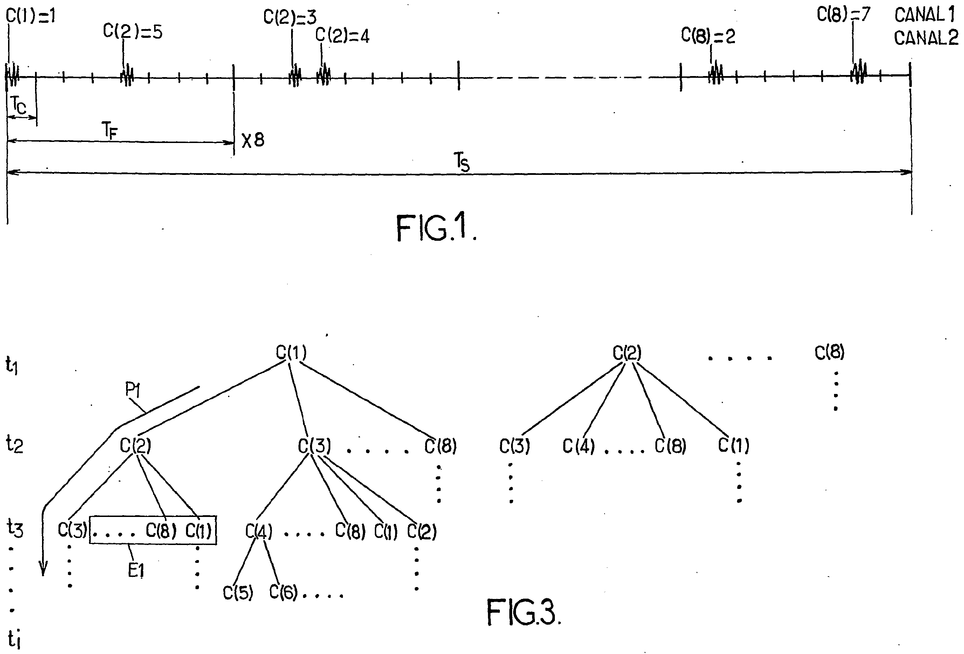

A l'intérieur de la séquence de transmission de chaque symbole, des sélections différentes d'un créneau par trame permettent de réaliser un accès multiple. Autrement dit, plusieurs canaux de transmission sont ainsi distingués, qui peuvent être utilisés simultanément pour transmettre des données différentes à des récepteurs distincts. La suite ordonnée des numéros de position, à l'intérieur des trames successives, des créneaux qui contiennent une impulsion significative pour transmettre un symbole par ce canal constitue un code caractéristique du canal. Ce code est donc formé d'une suite pseudo-aléatoire de N valeurs, N étant le nombre de trames à l'intérieur de la séquence de transmission d'un symbole. Chaque valeur est un nombre entier compris entre 1 et le nombre de créneaux par trame. La figure 1 illustre une séquence de transmission correspondant à un même symbole transmis simultanément par deux canaux distincts. Dans le cas de l'exemple illustré, les codes utilisés pour chaque canal sont respectivement 1, 3,..., 7 et 5, 4,..., 2.

Le changement de créneau entre deux trames successives pour un même canal, conformément au code de celui-ci, est appelé saut temporel («time hopping» en anglais). En plus de la fonction de multiplexage qui a été décrite, le saut temporel permet d'introduire une redondance, afin d'améliorer la qualité de la transmission. Cette redondance correspond à la multiplicité des trames indiquées par le code et qui contiennent un même symbole.

En outre, le saut temporel permet de rompre la périodicité du signal radio transmis. L'énergie du signal radio est alors répartie de façon plus continue sur l'ensemble du spectre fréquentiel.

Pour identifier un symbole transmis par un émetteur à destination d'un récepteur déterminé, il est nécessaire de synchroniser le récepteur par rapport à l'émetteur. Une fois la synchronisation obtenue, un motif de corrélation de symbole est généré au sein du récepteur en même temps que le signal radio est reçu. Ce motif est élaboré à partir du code du canal utilisé, et permet d'isoler dans le signal reçu les impulsions transmises à destination du récepteur. Pour cela, la synchronisation du récepteur doit être effectuée avec une précision de quelques dizaines de picosecondes, typiquement.

Usuellement, et notamment d'après les documents US 6,556,621 et US 2004/0190597, la synchronisation du récepteur est recherchée en réalisant une corrélation glissante entre le motif et le signal radio reçu. Pour cela, des taux de corrélation entre une séquence du signal reçu et le motif sont calculés, en appliquant des valeurs de retard variables au motif. La valeur de retard associée au taux de corrélation le plus élevé qui est ainsi obtenu correspond à la synchronisation. Etant donné que la précision de la synchronisation est alors proportionnelle au nombre de valeurs de retard pour lesquelles un taux de corrélation est calculé, une quantité considérable d'opérations doivent exécutées au sein du récepteur. Une telle méthode de synchronisation peut donc être particulièrement longue, notamment pour les transmissions à bas débit. Or les données qui sont contenues dans les signaux reçus avant que le récepteur soit synchronisé ne peuvent pas être décodées. Il en résulte qu'une quantité importante de données utiles transmises est perdue lors de l'établissement d'une nouvelle connexion radio par impulsions.

En outre, la méthode de synchronisation par corrélation glissante nécessite que le récepteur dispose de moyens de calcul importants. Notamment, plusieurs ensembles calculateurs sont usuellement disposés en parallèle au sein du récepteur, pour réduire la durée de la recherche de synchronisation. Il en résulte une complexité, un coût de fabrication et une consommation énergétique du récepteur qui ne sont pas compatibles avec certaines utilisations envisagées pour la transmission radio par impulsions.

Divers perfectionnements de la synchronisation par corrélation glissante ont été introduits récemment, afin de diminuer la durée de cette opération. Ces perfectionnements permettent de converger plus rapidement vers la valeur du retard appliqué au motif qui correspond au maximum du taux de corrélation. Malgré ces perfectionnements, la synchronisation du récepteur demeure une étape longue et pénalisante.

Enfin, la synchronisation par corrélation glissante est incompatible avec un récepteur fonctionnant par détection d'énergie. En effet, il est nécessaire que l'amplitude du signal radio soit repérée par le récepteur à chaque instant, même pour des niveaux de signal très bas, afin de calculer les taux de corrélation entre cette amplitude et le motif de corrélation.

Un but de la présente invention consiste donc, dans le cadre de la transmission radio par impulsions, à synchroniser un récepteur d'une façon rapide et sans nécessiter de moyens de calcul important au sein du récepteur.

Pour cela, l'invention propose un procédé de synchronisation d'un récepteur radio adapté pour recevoir des symboles codés sous forme d'impulsions radio transmises chacune dans un créneau de temps déterminé à l'intérieur d'une trame respective, ledit créneau étant déterminé par une valeur sélectionnée dans un ensemble de valeurs ordonnées formant un code enregistré dans le récepteur, le procédé comprenant les étapes suivantes, effectuées au sein du récepteur :

    a- détecter des impulsions reçues ;

    b- mémoriser des instants de réception desdites impulsions ;

    c- associer une première valeur sélectionnée dans le code à une première impulsion reçue ;

    d- sélectionner une deuxième valeur dans le code ;

    e- estimer au moins un instant de réception en combinant l'instant de réception mémorisé pour ladite première impulsion reçue avec lesdites première et deuxième valeurs du code sélectionnées ;

    f- si l'instant estimé concorde avec l'instant de réception mémorisé pour une deuxième impulsion reçue, valider les associations desdites première et deuxième valeurs du code avec lesdites première et deuxième impulsions reçues, sinon répéter les étapes c à f en variant l'une au moins desdites première et deuxième valeurs du code sélectionnées ; et

    g- déduire, d'au moins l'une des valeurs du code dont la sélection a été validée, un instant de commencement de la transmission d'un symbole.

Ainsi, dans un procédé de synchronisation selon l'invention, la quantité de calculs effectués au sein du récepteur n'est pas fixée a priori, mais les calculs sont poursuivis jusqu'à ce que la synchronisation soit trouvée. Autrement dit, des séquences prédéfinies de calcul ne sont plus effectuées de façon systématique, mais une quantité minimale de calcul est seulement effectuée, qui est adaptée en fonction du signal radio reçu. Il en résulte une réduction importante de la durée moyenne de calcul nécessaire pour synchroniser le récepteur par rapport au signal radio. Beaucoup moins de données utiles transmises sont donc perdues pendant l'établissement d'une nouvelle connexion radio.

La réduction de la quantité moyenne de calculs nécessaire pour synchroniser le récepteur permet aussi de simplifier les moyens de calcul dont le récepteur est équipé. Des récepteurs moins complexes, plus légers et possédant une consommation énergétique plus faible peuvent donc être utilisés.

Un procédé de synchronisation selon l'invention est compatible avec un fonctionnement du récepteur par détection d'énergie. L'étape a peut alors comprendre les sous-étapes suivantes :

    a1- extraire une enveloppe d'un signal radio reçu ;

    a2- comparer une amplitude de l'enveloppe extraite à un seuil de détection enregistré dans le récepteur ; et

    a3- si ladite amplitude dépasse le seuil de détection, identifier le signal radio à une impulsion reçue.

Des modules de circuits déjà développés pour exécuter de telles opérations de détection radio peuvent alors être repris pour équiper un récepteur adapté à l'invention. Une telle reprise de modules de circuits existants contribue à réduire le coût de conception du récepteur.

Selon un premier perfectionnement de l'invention, le seuil de détection peut être ajusté de façon à détecter, pendant une durée de transmission de deux symboles successifs, au moins autant d'impulsions qu'une fraction déterminée du nombre de valeurs contenues dans le code. Cette fraction peut être fixée, par exemple, à la moitié du nombre de valeurs contenues dans le code. Suffisamment d'impulsions sont ainsi détectées par le récepteur, pour lesquelles une concordance peut être vérifiée avec des instants de réception estimés à partir de valeurs du code. L'éventualité qu'une impulsion qui n'est pas détectée par le récepteur empêche de parvenir à la synchronisation est alors réduite. Dans le jargon de l'Homme du métier, le procédé de synchronisation est dit plus «robuste».

Selon un second perfectionnement de l'invention, une série de concordances est recherchée, entre des instants estimés à partir du code d'une part, et des instants de réception d'au moins trois impulsions d'autre part. La synchronisation trouvée est alors confirmée par plusieurs concordances, si bien que le risque d'aboutir à une synchronisation erronée à cause de coïncidences fortuites ou d'impulsions de bruit est diminué. La synchronisation obtenue est donc particulièrement fiable. Pour cela, le procédé comprend en outre les étapes suivantes, exécutées après que les sélections de m valeurs du code ont été validées, m étant un nombre entier supérieur ou égal à 2 :

d'- sélectionner une (m+1)-ième valeur dans le code ;

e'- estimer au moins un instant de réception en combinant l'instant de réception mémorisé pour la m-ième impulsion reçue avec les m-ième et (m+1)-ième valeurs du code sélectionnées ; et

f- si l'instant estimé concorde avec l'instant de réception mémorisé pour une (m+1)-ième impulsion reçue, valider l'association de la (m+1)-ième valeur du code avec la (m+1)-ième impulsion reçue,

sinon répéter les étapes d' à f' en variant la (m+1)-ième valeur du code sélectionnée.

Le procédé peut être poursuivi de façon récurrente pour obtenir des suites de valeurs du code sélectionnées et validées. Il est arrêté lorsqu'un nombre suffisant de valeurs du code ont été associées à des impulsions reçues. La synchronisation du récepteur est alors déterminée avec suffisamment de certitude. Par exemple, le procédé peut être poursuivi jusqu'à obtenir une série de validations correspondant au moins à la moitié des valeurs contenues dans le code.

L'invention propose en outre un récepteur radio adapté pour mettre en oeuvre un procédé de synchronisation tel que décrit précédemment.

Elle propose aussi un procédé de transmission radio comprenant les étapes suivantes :

- coder des symboles sous forme d'impulsions réparties à l'intérieur de trames respectives, chaque impulsion étant transmise dans un créneau de la trame correspondante déterminé par une valeur d'un code enregistré dans un émetteur radio et dans au moins un récepteur radio ;

- transmettre les impulsions par voie radio ; et

- synchroniser au moins un récepteur en utilisant un procédé tel que décrit précédemment.

L'invention propose encore un émetteur radio adapté pour mettre en oeuvre un tel procédé de transmission.

Elle propose de même un système de transmission radio par impulsions comprenant un émetteur et un récepteur tels que décrits précédemment.

Elle propose enfin un dispositif de synchronisation pour un récepteur radio qui est adapté pour recevoir des symboles codés sous forme d'impulsions radio transmises chacune dans un créneau de temps déterminé à l'intérieur d'une trame respective, ce créneau étant déterminé par une valeur sélectionnée dans un ensemble de valeurs ordonnées formant un code enregistré dans le récepteur. Un tel dispositif de synchronisation comprend :

a- des moyens de mémorisation d'instants de réception d'impulsions ;

b- des moyens de sélection de valeurs dans le code ; c- des moyens de calcul d'au moins un second instant de réception à partir de première et deuxième valeurs du code sélectionnées et d'un premier instant de réception mémorisé pour une première impulsion reçue ;

d- des moyens de validation d'associations de première et deuxième valeurs du code sélectionnées avec des première et deuxième impulsions reçues, disposés de façon à être activés si un second instant de réception calculé concorde avec l'instant de réception mémorisé pour la deuxième impulsion reçue ; et

e- des moyens de détermination d'un instant de commencement de la transmission d'un symbole, adaptés pour déterminer ledit instant de commencement à partir d'au moins une des valeurs du code dont la sélection a été validée.

D'autres particularités et avantages de la présente invention apparaîtront dans la description ci-après d'un exemple de mise en oeuvre non limitatif, en référence aux dessins annexés, dans lesquels :

- la figure 1, déjà décrite, illustre la structure d'une séquence de transmission radio par impulsions ;

- les figures 2a et 2b, destinées à être associées, représentent un diagramme synoptique d'un procédé de synchronisation selon l'invention ; et

- La figure 3 représente un arbre d'exécution de certaines étapes d'un procédé de synchronisation selon l'invention.

L'invention est maintenant décrite en détail pour un mode de transmission radio par impulsions conforme à la figure 1. On note c(i), avec i = 1, 2,..., 8, les valeurs successives du code. Par conséquent, pour le premier exemple considéré à la figure 1 : c(1) = 1, c(2) = 3,..., c(8) = 7. En outre, dans cet exemple, que le nombre d'impulsions utilisées pour coder un symbole est égal à la longueur du code.

Le procédé de synchronisation comprend deux tâches exécutées en parallèle. La première tâche consiste à détecter des impulsions dans le signal radio reçu, et à mémoriser l'instant de réception de chaque impulsion détectée. Elle correspond aux étapes a et b introduites plus haut. La seconde tâche consiste à rechercher des concordances entre des instants de réception estimés à partir d'une première impulsion reçue, et des instants auxquels d'autres impulsions sont reçues ultérieurement. Cette seconde tâche correspond aux étapes génériques c à f et d' à f'.

Afin d'obtenir plus rapidement une synchronisation du récepteur, il est avantageux de décomposer la seconde tâche en deux phases distinctes. La première phase correspond à l'estimation des instants de réception d'impulsions à partir des valeurs du code, et la seconde phase correspond à la comparaison entre les instants de réception estimés et les instants réels de réception d'impulsions. La première phase peut être exécutée par un processeur du récepteur sans attendre que les impulsions utilisées pour la comparaison soient encore reçues. La seconde phase peut alors être exécutée au fur et à mesure que les impulsions sont reçues. Pour cela, une mise en oeuvre possible du procédé de synchronisation consiste en ce que les étapes c à g soient exécutées en tâche de fond par le processeur du récepteur. L'étape b du procédé est alors répétée lors d'interruptions de l'exécution de la tâche de fond, déclenchées en réponse à la détection de nouvelles impulsions. Ainsi, la première phase de la deuxième tâche, qui peut nécessiter un certain temps de calcul et de manipulation de données mémorisées, peut être commencée et poursuivie indépendamment de l'état d'avancement de la première tâche. Seule l'exécution de la seconde phase de la deuxième tâche dépend de l'avancement de la première tâche, c'est-à-dire de la fréquence selon laquelle des impulsions sont détectées par le récepteur. La durée entre la réception de la première impulsion détectée et l'obtention de la synchronisation est ainsi fortement réduite dans la plupart des cas.

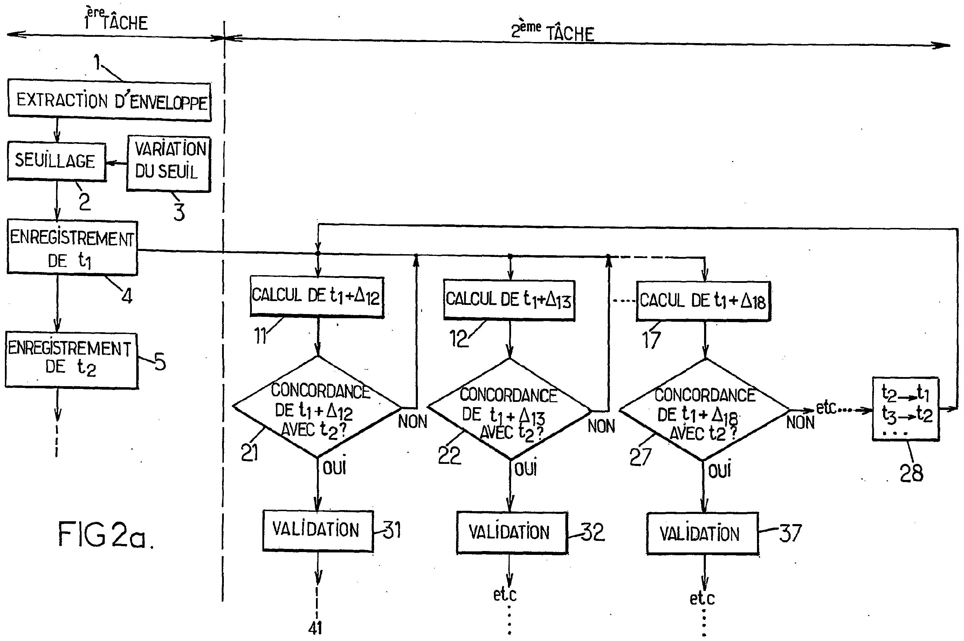

La première tâche du procédé de synchronisation est maintenant décrite en relation avec la figure 2a. D'une façon déjà mise en oeuvre dans des appareils existants, le signal radio est reçu par une unité de détection du récepteur, et une enveloppe du signal est extraite par élimination de porteuse (étape 1). L'amplitude de l'enveloppe est alors comparée à un seuil de détection fixé (étape 2). Chaque nouveau dépassement du seuil, qui intervient après une décroissance de l'amplitude de l'enveloppe en dessous du seuil, est interprété comme une nouvelle impulsion reçue.

L'instant de réception de l'impulsion reçue peut être déterminé simplement. Par exemple, un front montant d'un signal électronique spécifique peut être déclenché pour chaque impulsion reçue. L'instant de réception de l'impulsion correspond alors à l'instant de déclenchement du front montant. Il est repéré par rapport à un signal d'horloge interne au récepteur. D'autres méthodes de détermination de l'instant de réception d'une impulsion peuvent être utilisées alternativement, dans la mesure où elles procurent une précision compatible avec le procédé de transmission radio par impulsions.

Les instants réels de réception d'impulsions, notés $t_1$, $t_2$, $t_3$,..., sont mémorisés au sein du récepteur, dans une mémoire dédiée (étapes 4-6). Un tel enregistrement des instants de réception se présente avantageusement sous forme d'une liste ordonnée chronologiquement, et complétée chaque fois qu'une nouvelle impulsion est détectée. La première tâche, qui aboutit à l'enregistrement des instants réels de réception d'impulsions, est poursuivie tant que la synchronisation n'a pas été définitivement déterminée. Ainsi qu'il sera expliqué plus loin, il peut être avantageux de varier le seuil de détection des impulsions utilisé dans la première tâche (étape 3).

Le déroulement de la seconde tâche est organisé selon un arbre, tel que représenté à la figure 3. Chaque embranchement de l'arbre, ou noeud, correspond à une tentative d'association entre une valeur c(1), c(2),..., c(8) du code et une impulsion supplémentaire reçue. Un tel embranchement constitue une extension de l'arbre selon une dimension horizontale. En outre, des associations avec des valeurs du code tentées successivement pour différentes impulsions reçues forment des branches de l'arbre qui s'étendent selon une direction descendante. Le parcours d'une branche correspond donc à la prise en compte d'impulsions supplémentaires. Chaque impulsion reçue et prise en compte forme un étage de l'arbre, sur lequel sont situés les noeuds. Chaque étage est identifié sur la gauche de la figure 3 par l'instant $t_1$, $t_2$, $t_3$,... de réception de l'impulsion correspondante. La dimension de l'arbre, selon les deux directions horizontale et descendante, croît tant que la synchronisation n'a pas encore été déterminée. Toutefois, la dimension de l'arbre selon la direction descendante est limitée par le nombre de créneaux par trame, et la dimension de l'arbre selon la direction horizontale est limitée par la longueur du code. Si la synchronisation est déterminée dès les premières associations essayées entre des valeurs du code et des impulsions reçues, l'arbre construit est de taille réduite. La synchronisation du récepteur est alors très rapide.

Pour chaque impulsion reçue, les valeurs du code sont essayées successivement, par exemple en suivant l'ordre des valeurs dans le code, jusqu'à ce que l'une d'elles puisse être associée à l'impulsion. De préférence, la première valeur du code essayée pour une impulsion reçue est celle qui suit, dans l'ordre du code, la valeur associée avec succès à l'impulsion précédente pour la même branche de l'arbre. Lorsque toutes les valeurs du code jusqu'à la dernière, c'est-à-dire jusqu'à c(8) dans l'exemple, ont été essayées sans succès pour une impulsion, les essais d'association pour cette impulsion sont poursuivis avec c(1), puis avec les valeurs successives du code jusqu'à retrouver celle qui précède dans le code la valeur du noeud situé juste au dessus dans la même branche de l'arbre.

La seconde tâche commence en considérant simultanément les deux premières impulsions reçues, respectivement numérotées 1 et 2. Les tentatives d'association de ces deux impulsions avec deux valeurs du code constituent les deux premiers étages de l'arbre de la figure 3. Le premier étage de l'arbre, correspondant à $t_1$, regroupe toutes les valeurs du code parcourues à partir de c(1). Le second étage de l'arbre, qui correspond à $t_2$, regroupe pour chaque valeur du premier étage toutes les valeurs du code autres que celle indiquée au premier étage pour la même branche. Toutes les branches de l'arbre sont ainsi initiées.

L'association des impulsions 1 et 2 avec deux valeurs quelconques c(j) et c(k) du code, j et k étant deux nombres entiers compris entre 1 et le nombre de valeurs du code, consiste à rechercher une concordance entre $t_2$ et l'instant de réception d'une deuxième impulsion estimé à partir de $t_1$ de la façon suivante :

$$\text{si } k > j : \qquad t_{estimé}(2) = t_1 + [c(k)\text{-}c(j)] \times T_C \qquad\qquad (1)$$

$$\text{si } k \leq j : \qquad t_{estimé}(2) = t_1 + T_F + [c(k)\text{-}c(j)] \times T_C \qquad\qquad (2)$$

Différents critères de concordance entre $t_{estimé}(2)$ et $t_2$ peuvent être adoptés. Les inventeurs ont constaté qu'un critère convenable consiste à vérifier que la valeur absolue de la différence entre $t_{estimé}(2)$ et $t_2$ est inférieure à $T_C/4$. De façon générale, ce critère peut être énoncé de la façon suivante : à l'étape f, l'instant de réception estimé pour une deuxième impulsion à partir de l'instant de réception mémorisé pour la première impulsion concorde avec l'instant de réception mémorisé pour ladite deuxième impulsion si une valeur absolue d'une différence entre les instants de réception estimé et mémorisé pour la deuxième impulsion est inférieure à une fraction déterminée de la durée d'un créneau de temps. Ce seuil de concordance peut être égal à $T_C/4$ ou $T_C/16$, par exemple.

De retour à la figure 2a, les étapes référencées 11, 12,..., 17 correspondent au calcul de $t_{estimé}(2)$ en associant c(1) à l'impulsion 1. Pour raison de clarté de la figure 2a, on désigne par $\Delta_{jk}$ la combinaison de c(j) et de c(k) qui est ajoutée à l'instant de réception mémorisé pour une impulsion afin d'obtenir l'instant de réception estimé pour une impulsion ultérieure. Ainsi :

$$\text{si } k > j : \qquad \Delta_{jk} = [c(k)\text{-}c(j)] \times T_C \qquad\qquad (3)$$

$$\text{si } k \leq j : \qquad \Delta_{jk} = T_F + [c(k)\text{-}c(j)] \times T_C \qquad\qquad (4)$$

Pour l'association de l'impulsion 1 avec c(1), c'est-à-dire j = 1, et pour chaque possibilité d'association de l'impulsion 2 avec l'une des valeurs du code autre que c(1), la concordance entre $t_{estimé}(2)$ et $t_2$ est évaluée aux étapes référencées 21, 22,..., 27. Lorsqu'une concordance est obtenue à l'une des étapes 21, 22,..., 27, l'association de l'impulsion 1 avec c(1) et de l'impulsion 2 avec la valeur c(k) correspondante est validée (étapes respectives 31, 32,..., 37). Dans le cas contraire, les étapes 11-17 sont répétées en partant du noeud c(2) du premier étage de l'arbre (figure 3), et ainsi de suite en parcourant l'ensemble des premier et second étages de l'arbre.

Les premier et deuxième étages de l'arbre de la figure 3 correspondent aux étapes génériques c et d introduites plus haut. Les étapes 11, 12,..., 17 correspondent à l'étape générique e, pour chaque combinaison de première et deuxième valeurs du code. De même, les étapes 21, 22,..., 27 et 31, 32,..., 37 correspondent à l'étape générique f.

Si aucune concordance n'est ainsi trouvée pour les impulsions reçues 1 et 2 avec un couple de valeurs c(j), c(k) du code, l'impulsion 1 est considérée comme appartenant au bruit blanc et est écartée. Pour cela, l'instant $t_1$ est effacé de la mémoire du récepteur. Les impulsions reçues 2, 3,... sont alors renumérotées respectivement 1, 2,... (étape 28) et la seconde tâche du procédé est recommencée à partir de la nouvelle impulsion 1.

Dès qu'une validation a été obtenue à l'une des étapes 31-37 pour un couple de valeurs c(j), c(k), la synchronisation du récepteur est déterminée en calculant l'instant $t_0$ de début de transmission d'un symbole. $t_0$ est alors donné par la formule suivante :

$$t_0 = t_1 - c(j) \times T_C - (j-1) \times T_F + T_S \qquad (5)$$

L'exécution des étapes 11-17 et 21-27 pour différents couples de valeurs du code peut être arrêtée dès qu'un instant $t_0$ a ainsi été calculé. Alternativement, dans le cas où une synchronisation établie sur plus de deux impulsions est recherchée, l'exécution des étapes génériques c à f peut être poursuivie conformément aux deux premiers étages de l'arbre. Des validations peuvent éventuellement être ainsi obtenues pour plusieurs branches distinctes de l'arbre.

Les étapes 11-17 étant indépendantes de $t_2$, elles peuvent être exécutées avant que l'impulsion 2 ait été détectée par le récepteur. En particulier, les étapes génériques c à e peuvent être répétées pour plusieurs couples différents de première et deuxième valeurs du code sélectionnées avant que la deuxième impulsion soit détectée. L'étape f est alors exécutée pour l'un au moins desdits couples de première et deuxième valeurs après que la deuxième impulsion a été détectée. L'obtention d'une synchronisation du récepteur est par conséquent retardée de façon minimale par un éventuel délai de réception de la deuxième impulsion après la première impulsion.

Un procédé de synchronisation basé sur deux impulsions seulement est terminé dès qu'une validation a été obtenue conformément à l'étape générique f. La description qui suit concerne une poursuite du procédé lorsque la synchronisation est recherchée sur plus de deux impulsions.

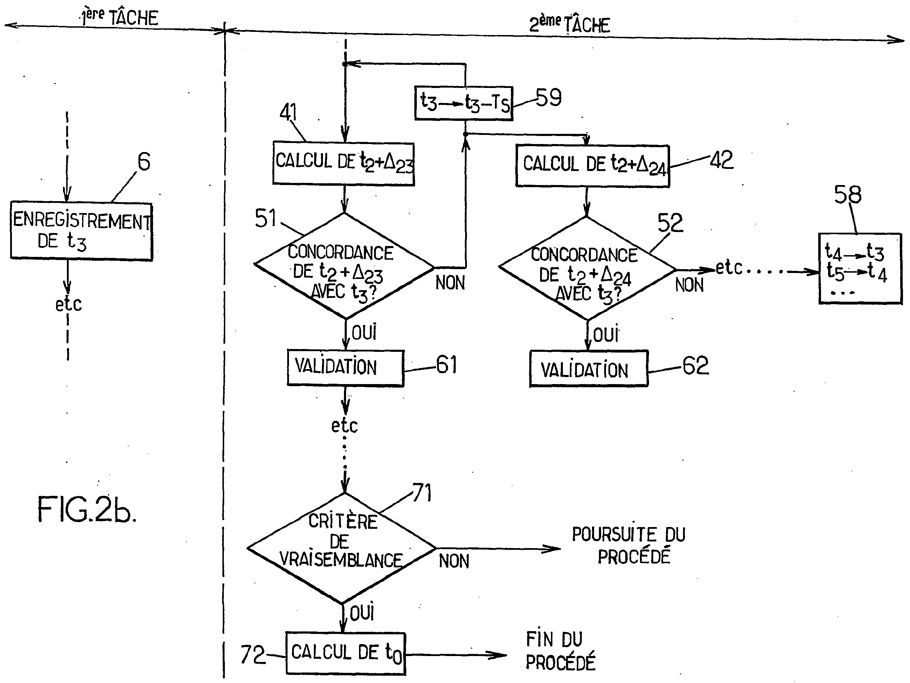

Des instants d'arrivée d'une troisième impulsion sont alors estimés à partir de $t_2$ de la façon suivante (étapes 41 et 42 de la figure 2b) :

$$t_{estimé}(3) = t_2 + \Delta_{mn} \qquad (6)$$

Dans cette relation, m est le numéro de la valeur c(m) du code dont l'association avec l'impulsion 2 a été validée pour la même branche de l'arbre. n est le numéro de la valeur c(n) du code dont l'association avec l'instant $t_3$ de réception de la troisième impulsion est essayée. $\Delta_{mn}$ est obtenu à partir des formules (3) et (4) en remplaçant j et k respectivement par m et n.

Une concordance entre $t_{estimé}(3)$ et $t_3$ est recherchée à l'étape 51 de la figure 3, pour m = 2 et n = 3. Le critère de concordance déjà utilisé et décrit plus haut peut être repris. En cas de concordance, l'association de c(3) avec la troisième impulsion est validée (étape 61), ce qui correspond au chemin noté P1 dans l'arbre de la figure 3. Si $t_{estimé}(3)$ ne concorde pas avec $t_3$, l'association de c(4) avec la troisième impulsion est alors essayée (étapes 42, 52 et 62). La recherche d'une valeur du code qui peut être associée avec la troisième impulsion reçue est alors poursuivie en parcourant la portion E1 du troisième étage de l'arbre (figure 3). Ainsi, les étapes génériques d' à f' peuvent être répétées pour plusieurs valeurs différentes du code sélectionnées comme troisième valeur à la suite des première et deuxième valeurs. Eventuellement, les étapes d' et e', qui ne nécessitent pas la connaissance de $t_3$, peuvent être répétées pour plusieurs valeurs différentes du code sélectionnées comme troisième valeur avant qu'une troisième impulsion soit détectée. L'étape f' est alors exécutée pour l'une au moins des valeurs sélectionnées comme troisième valeur après que la troisième impulsion a été reçue. Dans ce cas, un éventuel délai dans l'exécution de la première tâche du procédé n'engendre qu'un retard limité pour l'obtention de la synchronisation du récepteur, puisque des étapes de la seconde tâche du procédé sont néanmoins exécutées pendant ce délai.

Si la troisième impulsion ne peut être associée à aucune valeur du code, elle est écartée et remplacée par l'impulsion suivante reçue (étape 58).

En poursuivant le procédé, une valeur du code est associée à chaque impulsion reçue qui n'est pas écartée. Néanmoins, il est possible qu'aucune impulsion reçue ne puisse être ainsi associée avec une valeur donnée du code. Selon un perfectionnement de l'invention, les étapes génériques d' à f' sont alors répétées en sélectionnant une valeur du code pour laquelle aucune association n'a été validée, et en recherchant une concordance entre l'instant de réception estimé et un instant mémorisé de réception d'une impulsion avancé d'un nombre entier de durées de transmission d'un symbole. Pour cela, les étapes 41, 42,..., 51, 52,... sont répétées pour les valeurs du code qui n'ont pas encore été associées à une impulsion, en introduisant au moins une durée de transmission d'un symbole dans le critère de concordance. Les deux impulsions qui interviennent dans ces étapes peuvent donc appartenir à des séquences différentes de transmission de symboles, et la concordance entre les instants de réception estimé et réel est recherchée en retranchant à l'instant de réception réel au moins une fois la durée $T_S$ (étape 59). Une telle poursuite du procédé sur une durée de transmission de plusieurs symboles peut permettre de prolonger certaines branches de l'arbre de la figure 3.

Afin d'augmenter la probabilité de détecter une impulsion susceptible d'être associée à chaque valeur du code, le seuil de détection intervenant à l'étape 2 (figure 2a) peut encore être ajusté pendant tout le procédé, notamment si un nombre important de valeurs du code n'ont pas encore été associées à des impulsions. Les inventeurs ont constaté que, d'une façon générale, le nombre d'impulsions détectées n'augmente pas progressivement lorsque le seuil de détection est abaissé. Au contraire, plusieurs impulsions présentent souvent des niveaux d'amplitude sensiblement identiques, de sorte qu'elles sont détectées en deçà d'une même valeur de seuil. Selon une interprétation, des impulsions ayant des niveaux d'amplitude sensiblement identiques suivent un même chemin de propagation entre l'émetteur et le récepteur. Le niveau d'affaiblissement du signal radio dépend alors du chemin de propagation suivi, et plusieurs chemins de propagation distincts sont simultanément suivis. Avantageusement, le seuil de détection peut être abaissé à chaque ajustement de façon à prendre en compte un chemin de propagation supplémentaire. Ainsi, le seuil de détection des impulsions peut être abaissé par étapes successives de façon à détecter, pendant une durée de transmission d'un symbole, au moins autant d'impulsions supplémentaires à chaque étape d'abaissement que le nombre moyen d'impulsions utilisées pour transmettre un symbole.

Le décompte des associations validées selon une branche de l'arbre est mis à jour chaque fois qu'une association supplémentaire est validée pour cette branche. Eventuellement, ce décompte peut ne prendre en compte que les validations se rapportant à des valeurs différentes du code. Le procédé de synchronisation est poursuivi jusqu'à ce que le nombre d'associations validées d'une même branche de l'arbre confère une vraisemblance suffisante à ces associations (étape 71). L'instant $t_0$ de début de transmission d'un symbole est alors calculé en utilisant la formule (5) pour cette branche de l'arbre (étape 72). Le procédé de synchronisation est alors terminé et le récepteur entreprend de décoder les symboles reçus.

A titre d'exemple, le critère de vraisemblance peut être que le nombre de sélections validées de valeurs différentes du code selon une même branche de l'arbre soit supérieur à la moitié du nombre de valeurs contenues dans le code.

Lorsque la synchronisation du récepteur est recherchée à partir d'impulsions utilisées pour coder des symboles, il est possible que certaines trames ne comprennent pas d'impulsions pour plusieurs séquences successives de transmission de symboles. Par conséquent, les valeurs du code correspondant à ces trames inutilisées ne peuvent pas être associées à des impulsions. Pour éviter que de telles circonstances conduisent à prolonger le procédé de synchronisation trop longtemps, il est avantageux de prévoir un préambule pour chaque paquet de données transmis, dédié à la synchronisation du récepteur, et qui contient une impulsion par trame. Un tel préambule permet réduire le délai de synchronisation lors de l'établissement de la connexion. Il peut être au moins aussi long qu'une séquence de transmission de deux symboles successifs, par exemple. Dans ce cas, certaines au moins des impulsions radio utilisées pour synchroniser le récepteur appartiennent au préambule d'un paquet de données. Eventuellement, les impulsions du préambule correspondent toutes à un même retard d'état, mesuré par rapport au début du créneau contenant chaque impulsion. La précision de synchronisation est alors supérieure, étant donné qu'aucun retard d'état n'intervient de façon aléatoire lors de la détermination des instants de réception des impulsions.

Il est entendu que de nombreuses modifications et adaptations peuvent être introduites dans le procédé de synchronisation qui a été décrit en détail ci-dessus. A titre d'exemple, les inventeurs citent les adaptations possibles suivantes :

- le nombre d'impulsions utilisées pour coder un symbole peut être différent de la longueur du code ;
- les valeurs de code utilisées pour identifier un canal peuvent être des symboles alphanumériques quelconques ;
- la mémorisation des instants de réception d'impulsions peut être limitée aux deux dernières impulsions reçues, en les mettant à jour chaque fois qu'une nouvelle impulsion est reçue ;
- la mémorisation des instants de réception des impulsions peut être remplacée par une mémorisation d'écarts temporels séparant des impulsions successives ; et
- les étapes c à e peuvent n'être effectuées qu'après la réception de la deuxième impulsion, de même que les étapes d' et e' peuvent n'être effectuées qu'après la réception de la (m+1)-ième impulsion. Dans ce cas, les calculs nécessaires pour associer une nouvelle impulsion à une valeur du code sont exécutés en réponse à la réception de l'impulsion.

## Revendications

1. Procédé de synchronisation d'un récepteur radio adapté pour recevoir des symboles codés sous forme d'impulsions radio transmises chacune dans un créneau de temps déterminé à l'intérieur d'une trame respective, ledit créneau étant déterminé par une valeur sélectionnée dans un ensemble de valeurs ordonnées formant un code enregistré dans le récepteur (c(1), c(2), ...), le procédé comprenant les étapes suivantes, effectuées au sein du récepteur :

    a- détecter des impulsions reçues (1, 2) ;
    b- mémoriser des instants de réception desdites impulsions (4-6) ;
    c- associer une première valeur sélectionnée dans le code à une première impulsion reçue ;
    d- sélectionner une deuxième valeur dans le code ;
    e- estimer au moins un instant de réception en combinant l'instant de réception mémorisé pour ladite première impulsion reçue avec lesdites première et deuxième valeurs du code sélectionnées (11, ...., 17) ;

le procédé étant **caractérisé en ce qu'**il comprend en outre les étapes suivantes, qui sont aussi effectuées au sein du récepteur :

f- si l'instant estimé concorde avec l'instant de réception mémorisé pour une deuxième impulsion reçue (21, ...., 27), valider les associations desdites première et deuxième valeurs du code avec lesdites première et deuxième impulsions reçues (31, ...., 37),

sinon répéter les étapes c à f en variant l'une au moins desdites première et deuxième valeurs du code sélectionnées ; et

g- déduire, d'au moins l'une des valeurs du code dont la sélection a été validée, un instant de commencement de la transmission d'un symbole (72).

2. Procédé selon la revendication 1, suivant lequel les étapes c à g sont exécutées en tâche de fond par un processeur du récepteur, et suivant lequel l'étape b est répétée lors d'interruptions de l'exécution de la tâche de fond, déclenchées en réponse à la détection de nouvelles impulsions.

3. Procédé selon la revendication 1 ou 2, suivant lequel certaines au moins des impulsions radio utilisées pour synchroniser le récepteur appartiennent à un préambule de paquet de données, ledit préambule ayant une impulsion par trame.

4. Procédé selon la revendication 3, suivant lequel le préambule est au moins aussi long qu'une séquence de transmission de deux symboles successifs.

5. Procédé selon la revendication 3 ou 4, suivant lequel les impulsions du préambule correspondent toutes à un même retard d'état, mesuré par rapport au début du créneau de temps contenant chaque impulsion.

6. Procédé selon l'une quelconque des revendications précédentes, suivant lequel l'étape a comprend les sous-étapes suivantes :

a1- extraire une enveloppe d'un signal radio reçu (1) ;
a2- comparer une amplitude de l'enveloppe extraite à un seuil de détection enregistré dans le récepteur (2) ; et
a3- si ladite amplitude dépasse le seuil de détection, identifier le signal radio à une impulsion reçue.

7. Procédé selon la revendication 6, suivant lequel un front montant d'un signal électronique est déclenché pour chaque impulsion reçue, et suivant lequel l'instant de réception de l'impulsion correspond à l'instant de déclenchement du front montant.

8. Procédé selon la revendication 6 ou 7, suivant lequel le seuil de détection est ajusté (3) de façon à détecter, pendant une durée de transmission de deux symboles successifs, au moins autant d'impulsions qu'une fraction déterminée du nombre des valeurs contenues dans le code ($c(1)$, $c(2)$, ....).

9. Procédé selon la revendication 8, suivant lequel le seuil de détection est abaissé par étapes successives de façon à détecter, pendant une durée de transmission d'un symbole, au moins autant d'impulsions supplémentaires à chaque étape d'abaissement du seuil de détection que le nombre moyen d'impulsions utilisées pour transmettre un symbole.

10. Procédé selon l'une quelconque des revendications précédentes, suivant lequel, à l'étape f, l'instant de réception estimé pour une deuxième impulsion à partir de l'instant de réception mémorisé pour la première impulsion concorde avec l'instant de réception mémorisé pour ladite deuxième impulsion si une valeur absolue d'une différence entre les instants de réception estimé et mémorisé pour la deuxième impulsion est inférieure à une fraction déterminée de la durée d'un créneau de temps.

11. Procédé selon l'une quelconque des revendications précédentes, suivant lequel les étapes c à e sont répétées pour plusieurs couples différents de première et deuxième valeurs du code sélectionnées (11, ...., 17) avant que la deuxième impulsion soit détectée (5), et suivant lequel l'étape f (21, ...., 27) est exécutée pour l'un au moins desdits couples de première et deuxième valeurs du code sélectionnées après que la deuxième impulsion a été détectée.

12. Procédé selon l'une quelconque des revendications précédentes, comprenant en outre les étapes suivantes, exécutées après que les sélections de m valeurs du code ont été validées (31, ...., 37), m étant un nombre entier supérieur ou égal à 2 :

d'- sélectionner une (m+1)-ième valeur dans le code ;

e'- estimer au moins un instant de réception en combinant l'instant de réception mémorisé pour la m-ième impulsion reçue avec les m-ième et (m+1)-ième valeurs du code sélectionnées (41, 42, ...) ; et

f'- si l'instant estimé concorde avec l'instant de réception mémorisé pour une (m+1)-ième impulsion reçue (51, 52, ...), valider l'association de la (m+1)-ième valeur du code avec la (m+1)-ième impulsion reçue (61, 62, ...),

sinon répéter les étapes d' à f' en variant la (m+1)-ième valeur du code sélectionnée.

13. Procédé selon la revendication 12, suivant lequel les étapes d' et e' sont répétées pour plusieurs valeurs différentes du code sélectionnées comme (m+1)-ième valeur (41, 42, ...) avant que la (m+1)-ième impulsion soit détectée (6), et suivant lequel l'étape f' (51, 52, ...) est exécutée pour l'une au moins des valeurs sélectionnées comme (m+1)-ième valeur après que la (m+1)-ième impulsion a été reçue.

14. Procédé selon la revendication 12 ou 13, suivant lequel les étapes d' à f' sont répétées en sélectionnant une valeur du code pour laquelle aucune association n'a été validée, et en recherchant une concordance entre l'instant de réception estimé et un instant mémorisé de réception d'une impulsion avancé d'un nombre entier de durées de transmission d'un symbole (59).

15. Procédé selon l'une quelconque des revendications précédentes, suivant lequel le procédé est poursuivi jusqu'à obtenir une série de validations correspondant au moins à la moitié des valeurs contenues dans le code.

16. Procédé de transmission radio comprenant les étapes suivantes :

- coder des symboles sous forme d'impulsions réparties à l'intérieur de trames respectives, chaque impulsion étant transmise dans un créneau de la trame correspondante déterminé par une valeur d'un code (c(1), c(2), ...) enregistré dans un émetteur radio et dans au moins un récepteur radio ;
- transmettre les impulsions par voie radio ; et
- synchroniser au moins un récepteur en utilisant un procédé selon l'une quelconque des revendications 1 à 15.

17. Dispositif de synchronisation pour récepteur radio, ledit récepteur étant adapté pour recevoir des symboles codés sous forme d'impulsions radio transmises chacune dans un créneau de temps déterminé à l'intérieur d'une trame respective, ledit créneau étant déterminé par une valeur sélectionnée dans un ensemble de valeurs ordonnées formant un code enregistré dans le récepteur (c(1), c(2), ...), le dispositif de synchronisation comprenant :

a- des moyens de mémorisation d'instants de réception d'impulsions ;

b- des moyens de sélection de valeurs dans le code ;

c- des moyens de calcul d'au moins un second instant de réception à partir de première et deuxième valeurs du code sélectionnées et d'un premier instant de réception mémorisé pour une première impulsion reçue ;

d- des moyens de validation d'associations de première et deuxième valeurs du code sélectionnées avec des première et deuxième impulsions reçues, disposés de façon à être activés si un second instant de réception calculé concorde avec l'instant de réception mémorisé pour la deuxième impulsion reçue ; et

e- des moyens de détermination d'un instant de commencement de la transmission d'un symbole, adaptés pour déterminer ledit instant de commencement à partir d'au moins une des valeurs du code dont la sélection a été validée.

**Patentansprüche**

1. Verfahren zur Synchronisation eines Funkempfängers, der geeignet ist, codierte Symbole in Form von Funkimpulsen zu empfangen, die je in einem bestimmten Zeitschlitz innerhalb eines jeweiligen Rahmens übertragen werden, wobei der Schlitz durch einen Wert bestimmt wird, der aus einer Gruppe von geordneten Werten ausgewählt wird, die einen im Empfänger gespeicherten Code (c(1), c(2), ...) formen, wobei das Verfahren die folgenden Schritte enthält, die innerhalb des Empfängers ausgeführt werden:

a- Erfassen empfangener Impulse (1, 2);

b- Speichern von Empfangszeitpunkten der Impulse (4-6);

c- Zuordnen eines im Code ausgewählten ersten Werts zu einem ersten empfangenen Impuls;

d- Auswahl eines zweiten Werts im Code;

e- Schätzen mindestens eines Empfangszeitpunkts durch Kombinieren des für den ersten empfangenen Impuls gespeicherten Empfangszeitpunkts mit den ausgewählten ersten und zweiten Werten des Codes (11, ..., 17);

wobei das Verfahren **dadurch gekennzeichnet ist, dass** es außerdem die folgenden Schritte enthält, die auch innerhalb des Empfängers ausgeführt werden:

f- wenn der geschätzte Zeitpunkt mit dem für einen zweiten empfangenen Impuls (21, ..., 27), gespeicherten Empfangszeitpunkt übereinstimmt, Validieren der Zuordnungen der ersten und zweiten Werte des Codes zu den ersten und zweiten empfangenen Impulsen (31, ..., 37),

sonst Wiederholen der Schritte c bis f unter Veränderung mindestens eines der ersten und zweiten ausgewählten Werte des Codes; und

g- Ableiten, von mindestens einem der Werte des Codes, dessen Auswahl validiert wurde, eines Zeitpunkts des Beginns der Übertragung eines Symbols (72).

2. Verfahren nach Anspruch 1, wobei die Schritte c bis g als Hintergrundprogramm von einem Prozessor des Empfängers ausgeführt werden, und wobei der Schritt b bei Unterbrechungen der Ausführung des Hintergrundprogramms wiederholt wird, die als Reaktion auf die Erfassung neuer Impulse ausgelöst werden.

3. Verfahren nach Anspruch 1 oder 2, wobei mindestens bestimmte der Funkimpulse, die verwendet werden, um den Empfänger zu synchronisieren, zu einer Datenpaket-Präambel gehören, wobei die Präambel einen Impuls pro Rahmen hat.

4. Verfahren nach Anspruch 3, wobei die Präambel mindestens so lang ist wie eine Übertragungsfolge von zwei aufeinanderfolgenden Symbolen.

5. Verfahren nach Anspruch 3 oder 4, wobei die Impulse der Präambel alle einer gleichen Zustandsverzögerung entsprechen, gemessen bezüglich des Beginns des jeden Impuls enthaltenden Zeitschlitzes.

6. Verfahren nach einem der vorhergehenden Ansprüche, wobei der Schritt a die folgenden Teilschritte enthält:

a1-Entnahme einer Hüllkurve eines empfangenen Funksignals (1);

a2-Vergleich einer Amplitude der entnommenen Hüllkurve mit einer im Empfänger (2) gespeicherten Erfassungsschwelle; und

a3-wenn die Amplitude die Erfassungsschwelle überschreitet, Identifizieren des Funksignals mit einem empfangenen Impuls.

7. Verfahren nach Anspruch 6, wobei eine ansteigende Flanke eines elektronischen Signals für jeden empfangenen Impuls ausgelöst wird, und wobei der Empfangszeitpunkt des Impulses dem Auslösezeitpunkt der ansteigenden Flanke entspricht.

8. Verfahren nach Anspruch 6 oder 7, wobei die Erfassungsschwelle eingestellt (3) wird, um während einer Übertragungsdauer von zwei aufeinanderfolgenden Symbolen mindestens ebenso viele Impulse wie ein bestimmter Bruchteil der Anzahl der im Code enthaltenen Werte (c(1), c(2), ...) zu erfassen.

9. Verfahren nach Anspruch 8, wobei die Erfassungsschwelle in aufeinanderfolgenden Schritten gesenkt wird, um während einer Übertragungsdauer eines Symbols mindestens ebenso viele zusätzliche Impulse in jedem Absenkungsschritt der Erfassungsschwelle zu erfassen, wie die Anzahl von Impulsen, die zur Übertragung eines Symbols verwendet werden.

10. Verfahren nach einem der vorhergehenden Ansprüche, wobei, im Schritt f, der für einen zweiten Impuls ausgehend vom für den ersten Impuls gespeicherten Empfangszeitpunkt geschätzte Empfangszeitpunkt mit dem für den zweiten Impuls gespeicherten Empfangszeitpunkt übereinstimmt, wenn ein Absolutwert einer Differenz zwischen dem geschätzten und dem gespeicherten Empfangszeitpunkt für den zweiten Impuls niedriger ist als ein bestimmter Bruchteil der Dauer eines Zeitschlitzes.

11. Verfahren nach einem der vorhergehenden Ansprüche, wobei die Schritte c bis e für mehrere verschiedene Paare erster und zweiter ausgewählter Werte des Codes (11, ..., 17) wiederholt werden, ehe der zweite Impuls erfasst wird (5), und wobei der Schritt f (21, ..., 27) für mindestens eines der Paare ausgewählter erster und zweiter Werte des Codes ausgeführt wird, nachdem der zweite Impuls erfasst wurde.

12. Verfahren nach einem der vorhergehenden Ansprüche, das außerdem die folgenden Schritte enthält, die ausgeführt werden, nachdem die Auswahlvorgänge von m Werten des Codes validiert wurden (31, ..., 37), wobei m eine ganze Zahl größer als oder gleich 2 ist:

d'-Auswahl eines (m+1)-ten Werts im Code;
e'-Schätzen mindestens eines Empfangszeitpunkts, indem der für den m-ten empfangenen Impuls gespeicherte Empfangszeitpunkt mit den ausgewählten m-ten und (m+1)-ten Werten des Codes (41, 42, ...) kombiniert wird; und
f'-wenn der geschätzte Zeitpunkt mit dem für einen empfangenen (m+1)-ten Impuls (51, 52, ...) gespeicherten Empfangszeitpunkt übereinstimmt, Validieren der Zuordnung des (m+1)-ten Werts des Codes zum empfangenen (m+1)-ten Impuls (61, 62, ...),
sonst Wiederholen der Schritte d' bis f' unter Änderung des ausgewählten (m+1)-ten Werts des Codes.

13. Verfahren nach Anspruch 12, wobei die Schritte d' und e' für mehrere als (m+1)-ter Wert ausgewählte unterschiedliche Werte des Codes (41, 42, ...) wiederholt werden, ehe der (m+1)-te Impuls erfasst wird (6), und wobei der Schritt f' (51, 52, ...) für mindestens einen der als (m+1)-ter Wert ausgewählten Werte ausgeführt wird, nachdem der (m+1)-te Impuls empfangen wurde.

14. Verfahren nach Anspruch 12 oder 13, wobei die Schritte d' bis f' wiederholt werden, indem ein Wert des Codes ausgewählt wird, für den keine Zuordnung validiert wurde, und indem eine Übereinstimmung zwischen dem geschätzten Empfangszeitpunkt und einem gespeicherten Zeitpunkt des Empfangs eines Impulses vorgerückt um eine ganze Zahl von Übertragungsdauern eines Symbols (59) gesucht wird.

15. Verfahren nach einem der vorhergehenden Ansprüche, wobei das Verfahren fortgesetzt wird, bis eine Reihe von Validierungen erhalten wird, die mindestens der Hälfte der im Code enthaltenen Werte entspricht.

16. Funkübertragungsverfahren, das die folgenden Schritte enthält:

- Codieren der Symbole in Form von Impulsen, die innerhalb jeweiliger Rahmen verteilt sind, wobei jeder Impuls in einem Schlitz des entsprechenden Rahmens übertragen wird, der durch einen Wert eines Codes (c(1), c(2), ...) bestimmt wird, der in einem Funksender und mindestens einem Funkempfänger gespeichert ist;
- Übertragen der Impulse auf dem Funkweg; und
- Synchronisieren mindestens eines Empfängers unter Verwendung eines Verfahrens nach einem der Ansprüche 1 bis 15.

17. Synchronisationsvorrichtung für einen Funkempfänger, wobei der Empfänger geeignet ist, in Form von Funkimpulsen codierte Symbole zu empfangen, die je in einem bestimmten Zeitschlitz innerhalb eines jeweiligen Rahmens übertragen werden, wobei der Schlitz durch einen Wert bestimmt wird, der aus einer Gruppe von geordneten Werten ausgewählt wird, die einen im Empfänger gespeicherten Code (c(1), c(2), ...) formen, wobei die Synchronisationsvorrichtung enthält:

a- Einrichtungen zum Speichern von Empfangszeitpunkten von Impulsen;
b- Einrichtungen zur Auswahl von Werten im Code;
c- Einrichtungen zur Berechnung mindestens eines zweiten Empfangszeitpunkts ausgehend von ersten und zweiten ausgewählten Werten des Codes und von einem für einen ersten empfangenen Impuls gespeicherten ersten Empfangszeitpunkt;
d- Einrichtungen zur Validierung von Zuordnungen ausgewählter erster und zweiter Werte des Codes zu ersten und zweiten empfangenen Impulsen, die so angeordnet sind, dass sie aktiviert werden, wenn ein zweiter berechneter Empfangszeitpunkt mit dem für den zweiten empfangenen Impuls gespeicherten Empfangszeitpunkt übereinstimmt; und
e- Einrichtungen zur Bestimmung eines Anfangszeitpunkts der Übertragung eines Symbols, die geeignet sind, um den Anfangszeitpunkt ausgehend von mindestens einem der Werte des Codes zu bestimmen, deren Auswahl validiert wurde.

**Claims**

1. Method of synchronizing a radio receiver suitable for receiving coded symbols in the form of radio pulses, each transmitted in a predetermined time slot within a respective frame, said slot being determined by a value selected from a set of ordered values forming a code stored in the receiver (c(1), c(2), ...), the method comprising the following steps, performed within the receiver:

   a - detecting received pulses (1, 2);
   b - storing the moments of reception of said pulses (4-6);
   c - associating a first value selected from the code with a first received pulse;
   d - selecting a second value from the code;
   e - estimating at least one moment of reception by combining the moment of reception stored for said first received pulse with said first and second selected code values (11, ..., 17);

   the method being **characterized in that** it further comprises the following steps, also performed with the receiver:

   f - if the estimated moment matches the moment of reception stored for a second received pulse (21, ..., 27), validating the associations of said first and second code values with said first and second received pulses (31, ..., 37), otherwise repeating the steps c to f by varying at least one of said first and second selected code values; and
   g - deducing, from at least one of the values of the code whose selection has been validated, a moment of the start of transmission of a symbol (72).

2. Method according to Claim 1, wherein the steps c to g are executed as a background task by a processor of the receiver, and wherein the step b is repeated on interruptions of the execution of the background task, triggered in response to the detection of new pulses.

3. Method according to Claim 1 or 2, wherein at least some of the radio pulses used to synchronize the receiver belong to a data packet preamble, said preamble having one pulse for each frame.

4. Method according to Claim 3, wherein the preamble is at least as long as a sequence of transmission of two successive symbols.

5. Method according to Claim 3 or 4, wherein the pulses of the preamble all correspond to one and the same state delay, measured relative to the start of the time slot containing each pulse.

6. Method according to any one of the preceding claims, wherein the step a comprises the following substeps:

   a1 - extracting an envelope of a received radio signal (1);
   a2 - comparing an amplitude of the extracted envelope with a detection threshold stored in the receiver (2); and
   a3 - if said amplitude exceeds the detection threshold, identifying the radio signal with a received pulse.

7. Method according to Claim 6, wherein a rising edge of an electronic signal is triggered for each received pulse, and wherein the moment of reception of the pulse corresponds to the moment of the triggering of the rising edge.

8. Method according to Claim 6 or 7, wherein the detection threshold is adjusted (3) so as to detect, during a duration of transmission of two successive symbols, at least as many pulses as a predetermined fraction of the number of values contained in the code (c(1), c(2), ...).

9. Method according to Claim 8, wherein the detection threshold is lowered in successive steps so as to detect, during a duration of transmission of a symbol, at least as many additional pulses in each detection threshold lowering step as the average number of pulses used to transmit a symbol.

10. Method according to any one of the preceding claims, wherein, in the step f, the moment of reception estimated for a second pulse from the moment of reception stored for the first pulse matches the moment of reception stored for said second pulse if an absolute value of a difference between the estimated and stored moments of reception for the second pulse is less than a predetermined fraction of the duration of a time slot.

11. Method according to any one of the preceding claims, wherein the steps c to e are repeated for several different pairs of first and second code values selected (11, ..., 17) before the second pulse is detected (5), and wherein the step f (21, ..., 27) is executed for at least one of said pairs of first and second code values selected after the second pulse has been detected.

12. Method according to any one of the preceding claims, also comprising the following steps, executed after the selections of m code values have been validated (31, ..., 37), m being an integer number greater than or equal to 2:

d' - selecting an (m+1)th value from the code;
e' - estimating at least one moment of reception by combining the moment of reception stored for the mth received pulse with the mth and (m+1)th selected code values (41, 42, ...); and
f' - if the estimated moment matches the moment of reception stored for an (m+1)th received pulse (51, 52, ...), validating the association of the (m+1)th code value with the (m+1)th received pulse (61, 62, ...),

otherwise repeating the steps d' to f' by varying the (m+1)th value of the code selected.

13. Method according to Claim 12, wherein the steps d' and e' are repeated for several different code values selected as (m+1)th value (41, 42, ...) before the (m+1)th pulse is detected (6), and wherein the step f' (51, 52, ...) is executed for at least one of the values selected as (m+1)th value after the (m+1)th pulse has been received.

14. Method according to Claim 12 or 13, wherein the steps d' to f' are repeated by selecting a code value for which no association has been validated, and by searching for a match between the estimated moment of reception and a stored moment of reception of a pulse advanced by a whole number of symbol transmission durations (59).

15. Method according to any one of the preceding claims, wherein the method is continued until a series of validations is obtained that corresponds to at least half the values contained in the code.

16. Radio transmission method comprising the following steps:

- coding of the symbols in the form of pulses distributed within respective frames, each pulse being transmitted in a slot of the corresponding frame determined by a value of a code (c(1), c(2), ...) stored in a radio transmitter and in at least one radio receiver;
- transmission of the pulses by radio channel; and
- synchronization of at least one receiver by using a method according to any one of Claims 1 to 15.

17. Synchronization device for a radio receiver, said receiver being suitable for receiving symbols coded in the form of radio pulses, each transmitted in a predetermined time slot within a respective frame, said slot being determined by a value selected from a set of ordered values forming a code stored in the receiver (c(1), c(2), ...), the synchronization device comprising:

a - means of storing moments of reception of pulses;
b - means of selecting values from the code;
c - means of calculating at least one second moment of reception from first and second selected code values and a first moment of reception stored for a first received pulse;
d - means of validating associations of first and second selected code values with first and second received pulses, organized so as to be activated if a second calculated moment of reception matches the moment of reception stored for the second received pulse; and
e - means of determining a moment of the start of transmission of a symbol, suitable for determining said start moment from at least one of the code values whose selection has been validated.

FIG.1.

FIG.3.

EP 1 805 905 B1

$\overset{\text{ère}}{1}$ TÂCHE

$2^{\text{ème}}$ TÂCHE

```
┌─────────────────────────┐
│ EXTRACTION D'ENVELOPPE  │ —1
└─────────────────────────┘
```

```
┌──────────┐   ┌──────────┐
│ SEUILLAGE│   │ VARIATION│
│          │   │ DU SEUIL │
└──────────┘   └──────────┘
    2              3
```

```
┌──────────────┐
│ ENREGISTREMENT│
│   DE  t1     │
└──────────────┘
       4
```

```
┌──────────────┐
│ ENREGISTREMENT│  —5
│   DE  t2     │
└──────────────┘
```

| CALCUL DE $t_1 + \Delta_{12}$ | CALCUL DE $t_1 + \Delta_{13}$ | CACUL DE $t_1 + \Delta_{18}$ |

11    12    17

CONCORDANCE DE $t_1 + \Delta_{12}$ AVEC $t_2$?    NON    21

CONCORDANCE DE $t_1 + \Delta_{13}$ AVEC $t_2$?    NON    22

CONCORDANCE DE $t_1 + \Delta_{18}$ AVEC $t_2$?    NON    27

etc....

$t_2 \rightarrow t_1$
$t_3 \rightarrow t_2$
...
28

OUI    OUI    OUI

| VALIDATION | —31 | VALIDATION | —32 | VALIDATION | —37 |

41    etc    etc

## FIG 2a.

$t_3 \rightarrow t_3 - T_S$ —59

41

CALCUL DE $t_2 + \Delta_{23}$

CALCUL DE $t_2 + \Delta_{24}$ —42

58

$t_4 \rightarrow t_3$
$t_5 \rightarrow t_4$
...

6

ENREGISTREMENT DE $t_3$

51

CONCORDANCE DE $t_2 + \Delta_{23}$ AVEC $t_3$?    NON

52

CONCORDANCE DE $t_2 + \Delta_{24}$ AVEC $t_3$?    NON    etc....

etc

OUI

VALIDATION —61

OUI

VALIDATION —62

etc

FIG.2b.

71

CRITÈRE DE VRAISEMBLANCE    NON     POURSUITE DU PROCÉDÉ

OUI

72— CALCUL DE $t_0$     FIN DU PROCÉDÉ

EP 1 805 905 B1

## RÉFÉRENCES CITÉES DANS LA DESCRIPTION

**Documents brevets cités dans la description**

- US 6556621 B
- US 20040190597 A